Europäisches Patentamt

(19) European Patent Office

Office européen des brevets

(11) EP 0 949 607 A2

(12) EUROPEAN PATENT APPLICATION

(43) Date of publication:
13.10.1999 Bulletin 1999/41

(51) Int. Cl.⁶: **G11B 5/62**

(21) Application number: 99106771.1

(22) Date of filing: 06.04.1999

(84) Designated Contracting States:
AT BE CH CY DE DK ES FI FR GB GR IE IT LI LU
MC NL PT SE
Designated Extension States:
AL LT LV MK RO SI

(30) Priority: 06.04.1998 JP 9299398

(71) Applicant: Hitachi Maxell Ltd.
Osaka-fu (JP)

(72) Inventors:
• Kaneno, Kimihiko
Nagaokakyo-shi, Kyoto-fu (JP)

• Nakiri, Kazuhiko
Nagaokakyo-shi, Kyoto-fu (JP)
• Doi, Tsugihiro
Ibaraki-shi, Osaka-fu (JP)
• Soui, Tadashi
Osaka-shi, Osaka-fu (JP)

(74) Representative:
Selting, Günther, Dipl.-Ing. et al
Patentanwälte
von Kreisler, Selting, Werner
Postfach 10 22 41
50462 Köln (DE)

(54) **Magnetic recording medium**

(57) A magnetic recording medium comprising a non-magnetic substrate, an undercoat layer and a magnetic layer containing a magnetic powder and a binder, which are laminated in this order, where said magnetic layer has a ratio of (P-V) to Ra in the range between 4 and 20, in which (P-V) is a maximum roughness and Ra is a center line average height, a squareness of at least 0.7 in the machine direction of said magnetic layer, a squareness of 0.5 or less in a direction perpendicular to the surface of said magnetic layer, and a surface resistivity of $10^7$ Ω/sq. or less, which medium has a very low error rate.

EP 0 949 607 A2

**Description**

BACKGROUND OF THE INVENTION

Field of the Invention

The present invention relates to a magnetic recording medium such as a magnetic tape, a magnetic disc, etc., which has a low error rate.

Prior Art

Magnetic tapes are used in various applications such as audio tapes, videotapes, computer tapes, and the like. In the field of data-backup tapes, magnetic taps having a memory capacity of several ten giga bites (GB) per one reel are commercialized with the increase of the capacity of hard disks which are to be backupped. In future, it is essential to further increase the memory density of data-backup tapes to meet the further increase of the capacity of hard discs.
To realize such magnetic tapes which meet the increase of memory densities, it is necessary to improve the magnetic properties of magnetic powders or the dispersibility of magnetic powders, or to decrease a spacing loss between a magnetic tape and a magnetic head.
The magnetic properties of magnetic powders are improved by the use of iron alloy ferromagnetic powders instead of metal oxide magnetic powders or cobalt-containing iron oxide powders, since the higher percentage of residual magnetization in magnetic layers is more preferable for the increase of output. Thus, iron alloy ferromagnetic powders having a coercive force of 1,500 Oe are developed (see JP-A-5-234064, JP-A-6-25702, JP-A-6-139553, etc.).
The dispersibility of magnetic powder is improved by the use of binder resins having polar functional groups such as sulfonic acid groups, phosphoric acid groups or their alkali metal salts or the use of low molecular weight dispersants in combination with binder resins, by continuously carrying out a kneading step and a dispersing step of magnetic paints, or by the post-addition of lubricants to magnetic paints after dispersing magnetic powders (see JP-A-62-23226, JP-A-2-101624, JP-A-3-216812, JP-A-3-17827, Jp-A-4-47586, JP-A-8-235566, etc.).
The spacing loss between a magnetic tape and a magnetic head is decreased by smoothing the surface of a magnetic layer under high temperature and high pressure conditions in a calendering step, or providing a non-magnetic undercoat layer under a magnetic layer to suppress the influence of the surface conditions of a non-magnetic substrate onto the surface conditions of the magnetic layer (see JP-B-64-1297, JP-B-7-60504, JP-A-4-19815, etc.).
The main currents of recent recording systems are digital recording systems which convert data into codes. In such systems, a drive is connected with a bus line of a computer main frame through a controller, and in the course of recording data, the controller receives parallel data from the bus line and convert the data to serial data, divides them into blocks having specific lengths, add redundant bits for detecting and correcting errors so that the data are converted according to specific rules to record them effectively on a magnetic recording medium. Then, the converted data are transferred to a drive and recorded in the form of magnetized patterns on a magnetic recording medium. In the course of reading data, reproducing data pulses are generated from the above magnetized patterns by a peak detecting system in the drive and send back to the controller. Since the magnetized patterns contain time fluctuations, the controller should restore the magnetized patterns to the original data sequences by a phase-discrimination method using windows which are produced from the readout data.
However, the data pulses shift beyond the widths of data windows, and thus errors occur. When the number of errors in a block exceeds a specific amount, no correction is possible. Accordingly, magnetic recording media are required to have a low block error rate. However, it is difficult to avoid the increase of errors in recording systems having large capacities by increasing a data-recording capacity and decreasing an area per one bit, since the width of a window should be narrowed in such systems.
In addition, it has been found that magnetic recording media having a low block error rate in the initial running period suffers from the increase of a block error rate after running when the full length of the media is recorded and rewound and then the full length is read, as in the case of computer tapes. In particular, such phenomena are remarkable under high temperature and low humidity conditions, and often found when the head contact conditions between the magnetic recording medium and system are deteriorated.

SUMMARY OF THE INVENTION

One object of the present invention is to provide a highly reliable magnetic recording medium with a low block error rate as a magnetic recording medium used in digital recording systems.
Magnetic tapes for computers should transfer data at a high speed to record and read a large volume of data in a short time. In particular, when the full length of the tapes is recorded and rewound and then the full length is read, conventional magnetic recording media using magnetic powders are easily damaged on their magnetic layers during running under high-temperature low-humidity conditions and tend to suffer from the generation of temporary errors and thus the error rate tends to increase, although the temporary errors due to the dropout of magnetic powders during running under atmospheric temperature and humidity conditions.

It is contemplated to increase a S/N ratio or resolution properties, to decrease the number of dropouts, or to reduce modulation errors, in order to improve block error rates. That is, a digital pulse is present at the center of a window and has a margin of ±50 % in relation to the window width under ideal conditions. However, in the case of practically used magnetic recording media, the peak position of a reproduced signal shifts back and forth due to the influence of the fluctuation of a magnetized pattern, and thus the peak which outsteps the window width is detected as a digital error. Therefore, the above margin should be increased to reduce the number of errors, and parameters which contribute to the increase of such a margin have been searched.

As the result of studies on the mechanism of the generation of temporary errors, it has been found that the generation of temporary errors has a correlation with the abrasion properties of media, that is, the generation rate of temporary errors decreases as the abrasion properties decrease. Thus, the correlation of temporary errors and abrasion properties has been examined. When the abrasion properties are high, abraded powders of a magnetic head or a magnetic medium accumulate on the surface of the magnetic head. As the amount of accumulated powders increases, they penetrate into a gap between the magnetic head and magnetic recording medium to increase a contact gap between them, that is, a spacing loss, and finally an output decreases. Such decrease of an output induces dropouts and thus causes errors. The accumulated powders randomly penetrate into a gap between the magnetic head and magnetic recording medium, and are removed instantaneously. Thus, the penetration of accumulated powders is detected as temporary errors. To prevent the generation of such temporary errors, abrasion properties of magnetic recording media are noticed.

It is important to adjust the amount of abrasives added to the magnetic layers of magnetic recording media for the decrease of abraded amounts. Even if the amount of abrasives is suitably adjusted, the abrasion properties of magnetic layers vary with the surface shapes and configuration of magnetic recording media. Thus, a ratio (P-V)/Ra, in which (P-V) is a maximum roughness and Ra is a center line average height (roughness), is noted as a factor to express the surface configuration.

Hitherto, a center line average height (Ra) and a maximum surface roughness (P-V) are independently used as the measure of surface conditions. However, Ra and (P-V) are values obtained by measuring the surface roughness in the form of a curve in a cross section, and thus it is impossible to know the shape of an entire surface from each of Ra and (P-V). According to the present invention, the ratio of (P-V) to Ra [(P-V)/Ra] is used to evaluate the surface configuration, and it has been found that the ratio of (P-V) to Ra in the range between 4 and 20 is very suitable for the decrease of the abraded amount of magnetic layers.

When the above ratio is less than 4, the following two cases are expected.

The first case is that P-V and Ra are both small. When P-V is very small, effects to float a magnetic head from the surface of a magnetic layer are low. Thus, the magnetic head is in contact with the magnetic layer, and abraded powders of the magnetic layer stick to the magnetic head to contaminate the head.

The second case is that P-V and Ra are both large. When Ra is very large, an output decreases and a high reading output may not be achieved. Such magnetic recording media are not practically usable. When P-V is also large, a magnetic head is largely chipped, and the chipped particles of the head stick to the surface of a magnetic recording medium. Thus the amount of accumulated powders on the magnetic layer further increases.

When the above ratio exceeds 20, protrusions on the surface of a magnetic layer increase impact on a magnetic head.

When the above ratio is in the range between 4 and 20, preferably in the range between 6 and 18, the sticking of a magnetic recording medium to a magnetic head is prevented, the amount of abraded powders decreases, and thus good sliding properties are achieved between a magnetic head and a magnetic recording medium.

The ratio of Ra to (P-V) is measured as follows:

An objective head (40 times magnification) is attached to a non-contact surface roughness meter ("TOPO-3D" produced by WYKO), and (P-V) and Ra are measured four times with the surface roughness meter at a measuring wavelength of 648.9 nm on a measuring area of 250 μm square with gradient, curvature and cylindrical compensations, and four measured values are averaged to obtain an Ra/(P-V) ratio. Then, ten ratios measured in different areas are averaged.

Ra is preferably in the range between 3 and 10 nm.

Furthermore, a squareness in the machine direction of a magnetic layer, and a squareness in the direction perpendicular to the surface of a magnetic layer are noticed. Magnetic powder particles are preferably arranged uniformly in a magnetic layer from the viewpoint of abrasion properties. In practice, some particles have angles of dip in relation to the surface of a magnetic layer due to the conditions for coating, drying and calendering magnetic paints. Such particles having angles of dip are unsuitably embedded in a magnetic layer, and thus are rub away with a magnetic head when a magnetic recording medium slidingly runs over the magnetic head. That is, such powder particles may easily drop off from the surface of the magnetic layer.

It has been found that the number of magnetic powder particles having angles of dip in a magnetic layer decreases and thus the temporary errors decrease so that a block error rate further decreases, when a squareness in the machine direction of a magnetic layer is at least 0.7 and a squareness in the direction perpendicular to the surface of a magnetic layer is 0.5 or less by suitably adjusting the dispersibility of a magnetic powder in a magnetic paint, and the orientation of the magnetic powder in a magnetic field during the formation of a magnetic layer.

The angle of dip of magnetic powder particles can be controlled by the suitable combination of conditions for the magnetic orientation of the magnetic powder and calendering conditions. In particular, the conditions for the magnetic orientation can be controlled by the combination of a primary orientation step which controls the orientation of magnetic powder particles in the machine direction prior to drying and a secondary orientation step which controls the orientation of magnetic powder particles in the machine direction and the angles of dip in the step of hot-air drying. The secondary orientation step is preferably carried out by allowing a coated magnetic paint layer to pass the first pair of same polarity opposing magnets of plural pairs of such magnets 0.2 to 2.5 seconds before a finger-touch dried point, and a distance between adjacent pairs of the same polarity opposing magnets is preferably from 300 mm to 1,000 mm. The opposing polarities are preferably arranged in an alternate manner such as the first pair of N and N, the second pair of S and S, and so on. The intensities of magnetic fluxes of plural pairs of magnets are preferably the same. The number of pairs of opposing magnets may be 6 or less. Seven or more pairs of magnets cannot further improve the above effects.

Furthermore, it has been found that, when a surface resistivity on a magnetic layer is adjusted to $10^7$ $\Omega$/sq. or less, the redeposition of abraded particles of a magnetic layer can be suppressed and thus a temporary error rate can be reduced.

That is, since a motive power to attract abraded powders is electrification on a magnetic layer, a low surface resistivity of $10^7$ $\Omega$/sq. or less can decrease the amount of electrification.

Such a low surface resistivity can be achieved by selecting kinds and amounts of carbon black to be contained in an undercoat layer which is provided below a magnetic layer, or by adjusting dispersing conditions of an undercoat paint. The formation of an undercoat layer can facilitate the adjustment of the ratio (P-V)/Ra on the surface of a magnetic layer in addition to the adjustment of the surface resistivity in the above range.

The present invention has been completed based on the above findings.

Accordingly, the present invention provides a magnetic recording medium comprising a non-magnetic substrate, an undercoat layer and a magnetic layer containing a magnetic powder and a binder, which are laminated in this order, wherein said magnetic layer has a ratio of (P-V) to Ra in the range between 4 and 20, in which (P-V) is a maximum roughness and Ra is a center line average height, a squareness of at least 0.7 in the machine direction of said magnetic layer, a squareness of 0.5 or less in a direction perpendicular to the surface of said magnetic layer, and a surface resistivity of $10^7$ $\Omega$/sq. or less.

In a preferred embodiment of the magnetic recording medium according to the present invention, a ratio of a modulus in the machine direction to that in the transverse direction is from 0.85 and 2.00. In another preferred embodiment, the total thickness of the magnetic recording medium does not exceed 9 $\mu$m.

DETAILED DESCRIPTION OF THE INVENTION

In the magnetic recording medium of the present invention, a magnetic layer usually comprises a magnetic powder and a binder (resin), and optionally an abrasive, a lubricant, a carbon black, and so on. In addition, a magnetic layer may contain a dispersant to improve the dispersibility of the magnetic powder in the mixture of such components. Furthermore, any other additives or components, which are used in the magnetic layers of conventional magnetic recording media, may be added to a magnetic layer.

Magnetic powders are preferably iron alloy ferromagnetic powders, which can achieve high electromagnetic conversion properties. Among others, cobalt-containing iron alloy ferromagnetic powders are particularly preferable, since they have good magnetic properties such as a high saturation magnetization and a large coercive force, and thus they achieve a high output even when the thickness of a magnetic layer is 0.2, $\mu$m or less and a recording density is high with the shortest recording wavelength of 0.5 $\mu$m or less. Furthermore, iron alloy ferromagnetic powders containing rare earth elements in addition to cobalt are preferable to increase a S/N ratio.

The ratio of an average major axis length (L) of magnetic powder particles to the shortest recording wavelength ($\lambda$) (L/$\lambda$) is preferably 1/3 or less, since a noise can decrease.

One of noises generated from magnetic recording media is particulate noise due to magnetic powders. The particulate noise depends on the sizes of magnetic powder particles and the heterogeneity of particle sizes. Although it is important to decrease the sizes of magnetic powders, noises caused by the sizes of magnetic powder particles can be decreased when the ratio of an average major axis length (L) of magnetic powder particles to the shortest recording

wavelength ($\lambda$) (L/$\lambda$) is 1/3 or less, since the number of magnetic powder particles per a unit area, which contribute to the output of a magnetic head and the fluctuation of magnetized amounts per unit area due to the differences of data-recorded points can be suppressed.

The use of magnetic powders having an average major axis length of one third or less of the shortest recording wavelength can decrease the noises due to the sizes of magnetic powder, but cannot decrease the particulate noises due to the heterogeneity of particle sizes. In other words, when the magnetic powder particles have diverse particle sizes, magnetic flux densities generated from magnetic powder particles, which are present in a unit area contributing to the output of a head, may vary and thus the head output may not be zero (0), that is, the sum of magnetic flux densities may not be zero, even if no data are recorded on magnetic recording media.

As a result, the output varies depending on the difference of the data recorded points, and such variation of output increases the noise. In such a case, the level of noise further increases and a relative S/N ratio decreases when signals are recorded on magnetic recording media, since the noises due to the output variation are superposed on the above noises.

In particular in the case of magnetic tapes for computers, the shortest recording wavelength is 0.5 $\mu$m or less, and thus a track density and a track recording density are both increased. Accordingly, the influences of the magnetic fluxes of adjacent data increase.

When iron alloy ferromagnetic powders containing cobalt and also rare earth elements are used, the magnetic particle distribution of a magnetic powder is uniform, and thus particulate noises due to particle sizes can be decreased, and also a S/N ratio can be improved. The inclusion of rare earth elements can improve the abrasion resistance of magnetic powders.

Cobalt-containing iron alloy ferromagnetic powders can be produced by any conventional methods.

For example, (1) a goethite powder is calcined to form a magnetite powder, iron ions in the magnetite powder are ion exchanged with cobalt ions in an aqueous solution containing cobalt ions, and then the ion-exchanged powder is thermally reduced, (2) a cobalt-containing needle-shape goethite powder is prepared from an alkaline aqueous suspension of an iron salt and a cobalt salt, and then thermally reduced, (3) a co-precipitated material from an oxalic acid-containing aqueous solution of an iron salt and a cobalt salt is reduced, (4) an iron oxide powder, the particle surfaces of which are coated with cobalt, is thermally reduced, (5) reducing agents are added to a solution containing an iron salt and a cobalt salt, (6) alloy powders are prepared by evaporating metals in the atmosphere of inert gases to collide gas molecules, (7) the vapors of iron chloride and cobalt chloride are flowed in the mixed gas of hydrogen and nitrogen or argon to obtain reduced metals. Among these methods, the combination of the methods (1) and (2) is preferable, since a produced solid solution of alloy metals contain a high amount of cobalt, and the alloys have good corrosion resistance.

Magnetic layers have higher saturation magnetization and a higher coercive force, as the amount of cobalt in the cobalt-containing iron alloy ferromagnetic magnetic powders increases. However, cobalt cannot be alloyed with iron, and excessive cobalt forms its oxide, when the amount of cobalt is too high. Thus, the above effects are not attained. Accordingly, the amount of cobalt in the iron alloy is preferably from 10 to 40 wt. %, in particular from 10 to 30 wt. %, based on the weight of iron.

Cobalt-containing iron alloy ferromagnetic powders preferably contain one or more rare earth elements to make the particle size distribution uniform. Examples of rare earth elements are Nd, Y, La, Ce, Pr, Sm, Gd, Yb, Tb, etc. Among them, Y, La and Ce are preferable. Rare earth metals can be incorporated in the iron alloys, for example, by co-precipitating cobalt and rare earth elements in the production step of goethite, by suspending raw material iron oxide powder in a suspension containing rare earth element compounds, and the like.

As the amount of a rare earth element increases, the particle size distribution of iron alloy ferromagnetic powder can be made more uniform, and thus particulate noise decreases and a S/N ratio increases. In addition, adhesion forces between ferromagnetic powder particles and binders increase, and the detriment of magnetic powders in the process of kneading and mixing magnetic paint components. Thus, magnetic layers have hard film structures, and therefore the dropping of magnetic powder particles can be prevented at high speed sliding. However, if the amount of rare earth elements is too high, the content of cobalt decreases, and therefore, the saturation magnetization of magnetic powders decreases. Accordingly, the amount of a rare earth element is preferably from 0.1 to 10 wt. %, more preferably from 0.5 to 7 wt. %, based on the total weight of iron and cobalt.

Iron alloy ferromagnetic powders containing cobalt and rare earth elements may further contain other elements, for example, transition metals such as Zn, Sn, Ni, Mn, Ti, Cr, Cu, etc. However, it is preferable to avoid the inclusion of alkali metals or alkaline earth metals in iron alloy ferromagnetic powders, since the alkali metals or alkaline earth metals, in particular Ca, react with fatty acids contained in magnetic layers to form the salt of the fatty acids on the surfaces of magnetic layers. Thus, it is preferable to remove alkali metals or alkaline earth metals by washing in the course of the production of magnetic powders.

The surfaces of the particles of iron alloy ferromagnetic powders containing cobalt and rare earth elements are preferably coated with inorganic oxides to prevent the sintering of the particles in the thermal reduction process, and to improve the dispersibility of the particles in magnetic paints. Typical examples of inorganic oxides include aluminum oxide, silicon oxide, etc. Among them, aluminum oxide is particularly preferable since it is hard and thus improves the abrasion resistance of magnetic powders.

Inorganic oxides may be coated on the particle surfaces by applying solutions of alcoholates of aluminum or silicon such as aluminum isopropoxide, silicon methoxide, etc. on raw material iron oxide powders, and hydrolyzing such compounds to deposit aluminum oxide or silicon oxide on the particle surfaces.

The coated amount of inorganic oxides is usually at least 0.1 wt. %, preferably at least 0.5 wt. %, based on the total weight of iron and cobalt, to prevent the sintering of the magnetic powder particles and to improve the dispersibility of the magnetic powder particles. However, when the amount of inorganic oxides is too high, the saturation magnetization of the magnetic powders tends to decrease. Thus, the amount of inorganic oxides is 8 wt. % or less, preferably 6 wt. % or less based on the total weight of iron and cobalt.

Iron alloy ferromagnetic powders containing cobalt and rare earth elements tend to magnetically agglomerated because of their high saturation magnetization, and have highly active particle surfaces. Thus, they function as catalysts which chemically modify solvents contained in magnetic paints, or isocyanate components in crosslinking agents which are used as binder components. Therefore, iron alloy ferromagnetic powders have pH of less than 10, preferably less than 8. When the pH of iron alloy ferromagnetic powders is less than 10, the formation of modified products in magnetic paints can be suppressed, and thus the magnetic paints can form films which can resist to the high speed sliding.

The average major axis size (L) of iron alloy ferromagnetic powder particles is usually 0.15 $\mu$m or less, preferably 0.1 $\mu$m, and usually not less than 0.05 $\mu$m.

According to the present invention, the thickness of a magnetic layer is preferably 0.2 $\mu$m or less to attain high resolutions. In such a case, the use of magnetic powders having large particle sizes decrease the amount of magnetic powders contained in a magnetic layer, so that the magnetic properties of the magnetic layer deteriorate and a high output cannot be attained. When the magnetic powders having the above average major axis size are used, the amount of magnetic powders in a magnetic layer increases so that high saturation magnetization is attained.

Herein, an average major axis size (L) is obtained by measuring particle sizes of 100 particles in the scanning electron microphotograph of magnetic powder, and averaging the measured values.

For the same reason as described above, the BET specific surface area of iron alloy ferromagnetic powders is preferably at least 35 m$^2$/g, more preferably at least 40 m$^2$/g, most preferably at least 50 m$^2$/g.

The shapes of iron alloy ferromagnetic powder particles is preferably needle-like shapes having a ratio of an average major axis size (L) to an average minor axis size (crystal sizes) of 3 to 8.

Iron alloy ferromagnetic powders preferably has a coercive force of from 1,700 to 3,500 Oe, in particular from 2,000 to 2,800 Oe, to achieve a high output and a high resolution by short wavelength recording at a high track recording density.

The saturation magnetization of iron alloy ferromagnetic powders is usually from 120 to 200 emu/g, preferably from 130 to 160 emu/g to attain good reading output at a high track density, or to maintain the corrosion resistance of magnetic powders.

The squareness of magnetic powders is preferably at least 0.46, more preferably at least 0.48, most preferably at least 0.49 in terms of $\sigma_r/\sigma_s$.

The magnetic layer comprising the above-described iron alloy ferromagnetic powders have the following magnetic properties. That is, a coercive force is in the range between 1,700 and 3,500 Oe, in particular in the range between 2,000 and 3,000, a residual magnetic flux density is at least 1,800 G, in particular in the range between 2,000 and 4,000 G.

Herein, the magnetic properties of iron alloy ferromagnetic powders and those of magnetic layers are measured with a sample-vibrating magnetometer at an external magnetic flux of 10 kOe.

The use of the above-described iron alloy ferromagnetic powders according to the present invention can improve the magnetic properties of magnetic layers and achieves a high output even with the shortest recording wavelength of 0.5 $\mu$m or less. Furthermore, the use of such iron alloy ferromagnetic powders can reduce the noises generated by the magnetic powders themselves, and thus attain a high S/N ratio.

If the thickness of a magnetic layer is large in the case of a high track recording density with the shortest recording wavelength of 0.5 $\mu$m or less, a short wavelength output does not change because of the influence of thickness loss, although a long wavelength output increases as the thickness of the magnetic layer increases. Thus, the short wavelength output becomes relatively lower than the long wavelength output so that a resolution significantly deteriorates. Therefore, the resolution cannot be sufficiently improved by the effects of decreasing a self-demagnetization loss by the increase of a coercive force.

Such problems in relation to a resolution can be solved by making the thickness of a magnetic layer to 0.2 $\mu$m or less at a high density recording with the shortest recording wavelength of 0.5 $\mu$m or less. That is, the present invention can achieve the high residual magnetic flux density and high coercive force of magnetic layers, reduce self-demagnetization loss, decrease a thickness loss at a high recording density with the shortest wavelength of 0.5 $\mu$m or less, and contribute to the decrease of an error rate, by the use of the above-described iron alloy ferromagnetic powders and adopting a thickness of magnetic layers of 0.2 $\mu$m or less.

Binders in magnetic layers may be any conventionally used binders. Examples of such binders include mixture of at least one resin selected from the group of vinyl chloride base resins (e.g. vinyl chloride resins, vinyl chloride-vinyl acetate copolymers, vinyl chloride-vinyl acetate-vinyl alcohol copolymers, vinyl chloride-vinyl acetate-maleic anhydride copolymers, vinyl chloride-hydroxyl group-containing alkyl acrylate copolymers, etc.) and cellulose resins (e.g. nitrocellulose, etc.), and at least one polyurethane resin. Among others, the mixture of a vinyl chloride-hydroxyl group-containing alkyl acrylate copolymer and a polyurethane resin is preferable.

Examples of polyurethane resins include polyester polyurethane, polyether polyurethane, polyether polyester polyurethane, polycarbonate polyurethane, polyester polycarbonate polyurethane, etc.

Binders preferably have functional groups to improve the dispersibility and the filled amount of iron alloy ferromagnetic powders in magnetic paints and magnetic layers. Examples of functional groups are -COOM, -SO$_3$M, -OSO$_2$M, -P=O(OM)$_3$, -O-P=(OM)$_2$ in which M is a hydrogen atom, an alkali metal atom or an amine group, -OH, -NR$_2$, -N$^+$R$_3$ in which R is a hydrogen atom or a hydrocarbon group, an epoxy group, and the like. When two or more resins are used, they preferably have the same functional groups. In particular, two or more resins have -OSO$_3$M groups as the common functional groups.

The amount of binders is usually from 5 to 50 wt. parts, preferably from 10 to 35 wt. parts per 100 wt. parts of iron alloy ferromagnetic powders. In particular, when a vinyl chloride base resin and a polyurethane resin are used together, their amounts are from 5 to 30 wt. parts and from 2 to 20 wt. parts, respectively. Preferably, thermosetting crosslinking agents, which react with the functional groups of binders to crosslink the binders, may be used together with the binders. Examples of crosslinking agents are tolylene diisocyanate, hexamethylene diisocyanate, isophorone diisocyanate, etc., and polyisocyanate compounds such as reaction products of such isocyanates and compounds having two or more hydroxyl groups (e.g. trimethylolpropane, etc.) and condensation products of such isocyanates, and so on.

The amount of a crosslinking agent is preferably from 15 to 70 wt. parts per 100 wt. parts of a binder.

Abrasives contained in magnetic layers may be any conventional abrasives. Specific examples of abrasives include alumina (aluminum oxide), chromium oxide, titanium carbide, boron nitride, etc. Such abrasives can be added to magnetic paints by compounding the abrasives together with magnetic powders and binders in a kneading step using a kneader and the like or in a pre-mixing step, or by preparing the suspension of abrasives in a separate step from magnetic paints, and then mixing the suspension with the magnetic paints. The former process having no separate step is preferable in view of the productivity.

The amount of abrasives is preferably in the range between 6 and 20 wt. parts per 100 wt. parts of the above-described iron alloy ferromagnetic powders from the viewpoint of the electromagnetic conversion properties of magnetic recording media and the durability of the medium (magnetic head contamination). In particular, when alumina is used, its amount is preferably in the range between 8 and 15 wt. parts.

Among the above-exemplified abrasives, alumina is particularly preferable. Alumina particles may be in the form of particles, prisms or needles, and include $\alpha$-alumina containing 90 % or more of the $\alpha$-form, $\beta$-alumina, $\gamma$-alumina, etc. The particle size of alumina is usually from 0.05 to 1 $\mu$m, preferable from 0.1 to 0.4 $\mu$m. The use of alumina having a particle size of 0.05 $\mu$m or more can sufficiently exert the abrading functions of alumina, and maintain the dispersibility of alumina in magnetic paints. The use of alumina having a particle size of not exceeding 1 $\mu$m can decrease a spacing loss between a magnetic recording medium and a magnetic head, and maintain the high electromagnetic conversion properties.

Examples of commercially sold alumina are "AKP-10", "AKP-12", "AKP-30", "AKP-50", "HIT-82" and "HIT-60" (all available from Sumitomo Chemical Co., Ltd.), "UB40B" (available from Uemura Industries, Ltd.), etc.

Lubricants to be contained in magnetic layers may be conventionally used fatty acids, fatty acid esters, hydrocarbons, and the like. They may be used singly or in admixture of two or more or them. Among them, fatty acids having at least 10 carbon atoms, preferably 12 to 24 carbon atoms are preferable. The fatty acids facilitate the dispersion of magnetic powders since a part of their molecules adhere to cobalt-containing iron alloy ferromagnetic powders, moderate the contact between a magnetic recording medium and a magnetic head in an initial abrasion step, and decrease a friction coefficient of a magnetic layer to contribute to the decrease of the contamination of the magnetic head.

Fatty acids may be linear or branched and saturated or unsaturated ones, and linear fatty acids are preferable since they have good lubrication properties. Examples of fatty acids are lauric acid, myristic acid, stearic acid, palmitic acid, oleic acid, isostearic acid, etc.

The amount of fatty acids is preferably from 0.2 to 10 wt. parts, more preferably from 0.5 to 5 wt. parts, per 100 wt. parts of iron alloy ferromagnetic powders.

Fatty acid esters are also preferable. Among the esters, those of fatty acids having 12 to 22 carbon atoms and alcohols having 4 to 16 carbon atoms are more preferable. The fatty acids and alcohols, which constitute esters, may be linear or branched ones, or saturated or unsaturated ones.

With the magnetic recording media of the present invention, the extracted amount of fatty acid esters is preferably in the range between 5 and 15 mg/m$^2$ • μm. This extracted amount is obtained by dipping a piece of a magnetic recording medium in n-hexane at a temperature of 20±5°C for 16 to 24 hours, and converting the extracted amount in n-hexane to an amount per 1 m$^2$ per 1 μm of the thickness of the magnetic layer and an undercoat layer. When the extracted amount of an ester is less than 5 mg/m$^2$ • μm, the durability of magnetic layers is not sufficient. When the extracted amount of an ester exceeds 15 mg/m$^2$ • μm, the amount of abraded powder which adheres to magnetic heads increases and thus it is difficult to decrease block errors.

Carbon black contained in magnetic layers is preferably one having a small particle size of 75 nm or less. It is desirable to use such carbon black having a small particle size in combination with carbon black having a large particle size of 100 to 500 nm, preferably 200 to 400 nm, for example, "SEVACARB MTCl" (available from Columbian Carbon Corp.), and "Thermax Powder N-991" (available from Cancarb Corp.).

Carbon black is used in an amount of 0.5 to 5 wt. parts per 100 wt. parts of iron alloy ferromagnetic powders. In particular, carbon black having a large particle size is preferably used in an amount of 3 wt. parts or less per 100 wt. parts of iron alloy ferromagnetic powder.

Dispersants to be contained in magnetic layer may be phosphoric acid type dispersants, carboxylic acid type dispersants, chelating agents, etc. Such dispersants are preferably compounded in magnetic paints in a kneading step or an initial dispersing step. Such dispersants are conventionally added to a magnetic paint from a dispersing step using a kneader etc. to improve the dispersibility of magnetic powders. However, when dispersants are added, from a very early stage of kneading in the present invention, the dispersibility of magnetic powders can be improved in the initial dispersing step, but the dispersants are adsorbed preferentially to the particle surfaces of the magnetic powders to prevent the adsorption of binders and thus a large amount of binders are present near the surface of magnetic layers, since the iron alloy ferromagnetic powders used according to the present invention have very active particle surfaces and also their pH is in the alkaline range. If dispersants are adsorbed onto the particle surfaces of magnetic powders, the particle surfaces still have active areas. Therefore, isocyanate groups of isocyanate crosslinking agents, which are used when magnetic paints are applied, may be deactivated with such active areas and thus the coated films may not be sufficiently cured. Accordingly, it is preferable to add the dispersants after the initial dispersing step using a kneader, etc.

Examples of phosphoric acid type dispersants include alkyl phosphates (e.g. monomethyl phosphate, dimethyl phosphate, monoethyl phosphate, etc.), aromatic phosphates (e.g. phenylphosphonic acid, monooctyl phenylphosphate, etc.), and the like. Commercial products include "GARFAC RS410" (available from TOHO Chemical Co., Ltd.), "JP-502", "JP-504" and "JP-508" (all available from JOHOKU Chemical Industries, Ltd.), and the like.

Examples of carboxylic acid type dispersants include benzoic acid, phthalic acid, tetracarboxylnaphthalene, dicarboxylnaphthalene, fatty acids having 12 to 22 carbon atoms, etc.

Examples of chelating agents are 1,10-phenanthoroline, EDTA, dimethylglyoxyme, acetylacetone, glycine, dithiazone, nitrilotriacetic acid, etc.

The amount of dispersants is preferably from 0.5 to 5 wt. parts per 100 wt. parts of magnetic powders.

Solvents employed in the preparation of magnetic paints or lubricant solutions, which are used to form magnetic layers, may be any conventionally used solvents. Examples of solvents are aromatic solvents (e.g. benzene, toluene, xylene, etc.), ketones (e.g. acetone, cyclohexanone, methyl ethyl ketone, methyl isobutyl ketone, et.c), acetates (e.g. ethyl acetate, butyl acetate, etc.), carbonates (e.g. dimethyl carbonate, diethyl carbonate, etc.), alcohols (e.g. ethanol, isopropanol, etc.), and other organic solvent (e.g. hexane, tetrahydrofuran, dimethylformamide, etc.).

The thickness of a magnetic layer is not limited. When the thickness of a magnetic layer is too large, properties of magnetic recording media such as electromagnetic conversion properties necessary for high density recording may not be attained. When the thickness of a magnetic layer is too small, the uniformity of film thickness may not be maintained in the formation of a magnetic layer, or the amount of magnetic powders to be contained in a magnetic layer decreases so that magnetic properties of magnetic recording media tend to deteriorate. Thus, the thickness of a magnetic layer is usually 0.2 μm or less, and preferably at least 0.03 μm. In particular, the thickness of a magnetic layer is from 0.1 to 0.2 μm.

The magnetic recording medium of the present invention may have at least one undercoat layer (primer layer) between a non-magnetic substrate and a magnetic layer. The provision of the undercoat layer facilitate the adjustment of the ratio of (P-V) to Ra in the above-described range, and also the surface resistivity of the magnetic layer in the above-described range.

Each undercoat layer usually comprises inorganic powders, binders, lubricant, carbon black, etc.

Inorganic powders may be any conventional ones, and can be nonmagnetic or magnetic powders.

Examples of nonmagnetic powders include α-alumina containing 90 % or more of the α-form, β-alumina, γ-alumina, α-iron oxide, $TiO_2$ (rutile and anatase), $TiO_x$, cerium oxide, tin oxide, tungsten oxide, ZnO, $ZrO_2$, $SiO_2$, $Cr_2O_3$, goethite, corundum, silicon nitride, titanium carbide, magnesium oxide, boron nitride, molybdenum disulfide, copper oxide, magnesium carbonate, calcium carbonate, barium carbonate, strontium carbonate, barium sulfate, silicon carbide, titanium carbide, etc. They may be used singly or in admixture of two or more.

Examples of magnetic powders are those having a low coercive force of 300 Oe or less such as $\gamma$-$Fe_2O_3$, cobalt

containing $\gamma$-$Fe_2O_3$, barium ferrite, etc.

The particles of such inorganic powders may have spherical, needle-like or platelet forms. The particle size of the inorganic powders is preferably 0.5 $\mu$m or less, since the too large particle size may deteriorate the surface conditions of the undercoat layer, and thus may have influenced on the surface conditions of a magnetic layer. However, when the particle size of the inorganic powders is too small, the amount of inorganic powders to be contained in an undercoat layer increases, and thus the volume of pores, which maintain lubricants, decreases and also cushioning effects deteriorate. Thus, the particle size of inorganic powders is preferably at least 0.05 $\mu$m

The amount of inorganic powders is usually from 60 to 90 et. %, preferably from 70 to 80 wt. %, based on the weight of the undercoat layer, for the same reason as those described above.

Binders to be contained in undercoat layers may be the same resins as those constituting magnetic layers, which are described above. Preferably, the binder of undercoat layers is the same as that of the magnetic layer. In particular, when an undercoat layer and a magnetic layer both contain the mixture of vinyl chloride base resins and polyurethane resins, the elasticity of the undercoat layer can be made close to that of the magnetic layer, so that the load of a magnetic head can be dispersed through the magnetic layer and undercoat layer.

The binder contained in undercoat layers preferably have the same functional groups as those of the binder contained in a magnetic layer. When the functional groups are the same in the undercoat layers and magnetic layer in the mixture of vinyl chloride base resins and polyurethane resins, the adhesion between two layers improves, and lubricants can be smoothly exuded from the undercoat layers to the magnetic layer.

The amount of binders in an undercoat layer is preferably from 20 to 45 wt. parts, more preferably from 25 to 40 wt. parts per 100 wt. parts of inorganic powders in the undercoat layer.

It is preferable for undercoat layers to contain thermosetting crosslinking agents, which crosslink binder resins by bonding the functional groups of the binders. The amount of crosslinking agents is usually from 15 to 70 wt. parts per 100 wt. parts of the binders.

Lubricants to be contained in undercoat layers may be the same as those contained in magnetic layers. Among others, fatty acid esters are preferably used singly or as the mixture of fatty acid esters and the minor amount of fatty acids, since the fatty acid esters have better exuding properties to upper layers than the fatty acids.

The amount of lubricants is usually from 4 to 18 wt. parts, preferably from 5 to 16 wt. parts, more preferably from 6 to 14 wt. parts, per 100 wt. parts of the inorganic powders. The weight ratio of the fatty acids to the fatty acid esters is preferably from 0:100 to 40:60, in particular from 0:100 to 30:70.

The lubricants can be contained in undercoat layers by adding the lubricants to an undercoat paint when the components of the undercoat paint are mixed with a kneader, etc., or added to an undercoat paint before or after such mixing. Alternatively, the lubricants maybe applied to the surface of an already formed undercoat layer by coating or spraying.

Carbon black to be contained in undercoat layers is preferably the mixture of carbon black having a particle size of 0.01 to 0.03 $\mu$m and carbon black having a particle size of 0.05 to 0.3 $\mu$m. The former carbon black contributes to the maintenance of pores which hold lubricants like in magnetic layers, while the latter carbon black contributes to the increase of film strength and also the achievement of cushioning properties.

The amount of carbon black in an undercoat layer is preferably from 5 to 70 t. parts, more preferably from 15 to 40 wt. parts, per 100 wt. parts of inorganic powders.

Examples of commercially sold carbon black having a particle size of 0.01 to 0.03 $\mu$m are "BLACK PEARLS 800", "Mogul-L", "VULCAN XC-72" and "Regal 660R" (all available from Cabot Corp.); "Raven 1255" and "Conductex SC" (both available from Columbian Carbon Corp.); and the like.

Examples of commercially sold carbon black having a particle size of 0.05 to 0.3 $\mu$m are "BLACK PEARLS 130" and "Monarch 120" (both available from Cabot Corp.); "Raven 450" and "Raven 410" (both available from Columbian Carbon Corp.); "Termax Powder N-991" (available from Cancarb Corp.); and the like.

Solvents which are used to prepare undercoat (primer) paints for the formation of undercoat layers may be the same solvents as those used for the preparation of magnetic paints, for example, aromatics, ketones, esters, alcohols, hexane, tetrahydrofuran, etc.

The thickness of undercoat layers is preferably from 0.5 to 3 $\mu$m. When the undercoat layer is too thick, the total thickness of a magnetic recording medium such as a magnetic tape becomes too thick. When the thickness of the undercoat layer is too thin, it is difficult to maintain the uniformity of the thickness of the layer when it is formed.

The magnetic recording media of the present invention may be of any shape, for example, a tape, a disc, etc.

When magnetic recording media are in the form of tapes, it is preferable to form a backcoat layer on the reverse side of a magnetic layer. The formation of a backcoat layer can reduce a surface resistivity of the media so that the adhesion of dusts causing dropouts is prevented, and decrease a friction coefficient in running systems such as guide pins so that the running of tapes is smoothened.

The components of backcoat layers include fillers and binders. The backcoat layers may optionally contain lubricants such as fatty acids, fatty acid esters, silicone oils, etc.; dispersants such as surfactants, etc.; or other conventional additives.

The fillers can contain conductive carbon black, and also nonmagnetic inorganic powders which are generally used as abrasives to reduce a friction coefficient and increase mechanical strength. Examples of such inorganic powders include $\alpha$-$Fe_2O_3$, $Fe_3O_4$, $TiO_2$, graphite, CaO, $SiO_2$, $Cr_2O_3$, $\alpha$-$Al_2O_3$, SiC, $CaCO_3$, $BaSO_4$, ZnO, MgO, boron nitride, TiC, ZnS, $MgCO_3$, $SnO_2$, etc.

Binders to be contained in backcoat layers may be the same resins as those contained in magnetic layers, which are described above. Among others, the mixture of nitrocellulose resins and polyurethane resins is preferably used to reduce a friction coefficient and thus to improve the running properties of magnetic recording media.

The amount of binders in a backcoat layer is preferably from 15 to 200 wt. parts per 100 wt. parts of fillers containing carbon black and nonmagnetic inorganic powders.

It is possible to add crosslinking agents such as polyisocyante compounds to the backcoat layers.

The thickness of a backcoat layer is preferably from 0.3 to 1 $\mu$m after calendering. When the thickness of a backcoat layer is too thick, the total thickness of a magnetic recording medium becomes large. When the thickness of a backcoat layer is too thin, the surface conditions of the backcoat layer deteriorate due to the influence of the surface conditions of a nonmagnetic substrate, and the deteriorated surface conditions are transferred to the surface of a magnetic layer so that the electromagnetic conversion properties and the like of a magnetic recording medium tend to deteriorate.

The formation of a backcoat layer is important from the viewpoint of the provision of cupping to tapes, and the total thickness of a magnetic layer, an undercoat layer and a backcoat layer is preferably from 1.5 to 3.5 $\mu$m, when the thickness of a magnetic recording medium is designed. When a piece of a magnetic recording medium having the so-designed thickness is placed on a flat plate with the magnetic layer side facing upward, the magnetic layer side of a magnetic recording medium is convexed and the height of convex is in the range between 0.1 and 1.2 mm. Thus, the magnetic recording media with good running properties can be obtained.

The surface roughness of a backcoat layer is usually from 30 to 100 nm, preferably from 50 to 80 nm in terms of three dimensional surface roughness P-V measured with an interferometer. When the P-V of a backcoat layer is too small, the friction coefficient of the backcoat layer increases so that the winding disturbance of a tape increases when the tape is rewound, and thus the library maintenance of the tape decreases. When the P-V is too large, the flatness of the surface of a backcoat layer deteriorates, and the unevenness of the backcoat surface is transferred to the surface of a magnetic layer to roughen the surface of the magnetic layer. Thus, it becomes difficult to maintain the ratio of P-V to Ra in the above-decribed range according to the present invention.

Nonmagnetic substrates to be used in magnetic recording media according to the present invention may be any conventional ones. Preferably, nonmagnetic substrates are plastic films made of various resins such as polyesters (e.g. polyethylene terephthalate, polyethylene naphthalate, etc.), polyolefins, cellulose triacetate, polycarbonate, polyamide, polyimide, polyamideimide, polysulfone, aramid, aromatic polyamide, etc. The thickness of such plastic films is usually from 3 to 7 $\mu$m.

When the anisotropy of shrinkage of a nonmagnetic substrate, which appears in a test under service conditions, in particular under high temperature atmosphere, is large, the follow-up properties of a magnetic recording medium deteriorates and thus tracking errors tend to occur. Therefore, nonmagnetic substrates have thermal shrinkage factors of 1.5 % or less in a machine direction and of 1 % of less in a transverse direction. Thermal shrinkage factors are measured with six samples of a nonmagnetic substrate, each of which has a length of 300 mm (in a machine direction or a transverse direction) and a width of 10 mm, after they are heated with hot air at 105°C for 30 minutes and then cooled, and calculated by the equation:

$$\text{Thermal shrinkage factor (\%)} = (\text{original length - length after shrinking}) \times 100/\text{original length}$$

The above thermal shrinkage factor is the average of calculated values of six samples.

In the production of magnetic recording media according to the present invention, paints for the formation of magnetic layers, undercoat layers and backcoat layers can be prepared by any conventional methods. Preferably, a kneading process and a primary dispersing process are combined. In the primary dispersing process, components are preferably dispersed with a sand mill. In particular, the use of a sand mill is preferable for the preparation of a magnetic paint, since the surface conditions of a magnetic layer can be controlled in addition to the improvement of the dispersibility of magnetic powders.

Each paint can be applied by any conventional coating method such as gravure coating, roll coating, blade coating, extrusion coating, etc. When an undercoat layer is formed, the paint for an undercoat layer and that for a magnetic layer may be applied by a successive coating method, in which a paint for an undercoat layer is firstly applied on a nonmagnetic substrate and dried, and then a paint for a magnetic layer is applied, or a simultaneous coating method. After the application of a magnetic layer, the magnetic layer is subjected to an orientation treatment in a magnetic field so that squarenesses in the machine and transverse directions are adjusted in the ranges defined by the present invention.

The surface conditions of a magnetic layer or a backcoat layer are preferably adjusted by calendering with a plastic roll or a metal roll after the application and drying of a paint. The calendering can adjust the ratio of (P-V) to Ra of the surface of a magnetic layer or a backcoat layer, and also increase a packing rate of magnetic powders in a magnetic layer so that a residual magnetic flux density can increase.

It is preferable to carry out aging after calendering. The aging can facilitate the curing of a layer and thus increase the film strength. An aging temperature is preferably 70°C or less. When an aging temperature is too high, tapes are too tightly wound and thus the surface unevenness of a backcoat layer is transferred to a magnetic layer so that the surface conditions of the magnetic layer deteriorate. For the purpose of humidity conditioning, the aging is preferably carried out in an atmosphere of 5 to 60%RH.

In the production of magnetic recording media, it is preferable to abrade the surfaces of magnetic layers while running the media after the formation of magnetic layers to remove dusts causing dropouts, and weak parts from the surfaces of magnetic layers, and to adjust the ratio of (P-V) to Ra on the surfaces of magnetic layers.

The abrading can be carried out with a blade or an abrasive wheel. Among them, the abrasion with an abrasive wheel is preferable from the viewpoint of productivity. The abrading with an abrasive wheel is disclosed in JP-A-62-150519, JP-A-62-172532, JP-A-2-23521, etc. The materials of abrasive wheels can be ceramics, special steel, sapphire, diamond, etc.

The peripheral speed of an abrasive wheel is in the range of ±200 % of a tape running speed of 50 to 300 m/min., and the winding angle of a tape around an abrasive wheel is preferably from 10 to 80 degrees.

The magnetic recording medium of the present invention is characterized in that the ratio of (P-V) to Ra on the surface of a magnetic layer is in the range between 4 and 20, preferably in the range between 6 and 18. Thus, the abraded amount of a magnetic head and a magnetic layer is decreased and therefore good sliding properties are attained between the magnetic head and magnetic recording medium.

The magnetic recording medium of the present invention is further characterized in that a magnetic layer has a squareness of at least 0.7 in a machine direction and of 0.5 or less in a direction perpendicular to the surface of the magnetic layer, and a surface resistivity of $10^7$ $\Omega$/square or less. These characteristic features can decrease temporary errors, and greatly reduce a block error rate.

Furthermore, the magnetic recording medium of the present invention has a ratio of a modulus in a machine direction to that in a transverse direction preferably in the range between 0.85 and 2.00, more preferably in the range between 0.85 and 1.25. In such a range, a magnetic tape has sufficient strength in the machine direction even when the thickness of the tape decreases. Furthermore, the contact conditions of a magnetic recording medium to a magnetic head are improved. Thus, the magnetic recording medium of the present invention has good reliability.

When the above ratio is less than 0.85, it is difficult to maintain the modulus in the machine direction, and a magnetic head is abnormally abraded. When the above ratio exceeds 2.00, the magnetic recording medium cannot maintain sufficient stiffness so that head touching is not stabilized. In either case, the output decreases or fluctuates.

In a preferred embodiment of the present invention, a magnetic recording medium has a total thickness of 8 $\mu$m or less for the use in digital systems. The total thickness of a magnetic recording medium can be adjusted to 8 $\mu$m or less by the suitable selection of the thickness of a nonmagnetic substrate depending on the total thickness of a magnetic layer, an undercoat layer and a backcoat layer (1.5 to 3.5 $\mu$m). The adjustment of the total thickness of a magnetic recording medium in the above range can decrease a block error rate.

Recently, a signal reading method using a magnetoresistance device as a head is proposed in addition to the use of a MIG (metal in gap) type head (see JP-A-8-4500 and JP-A-6-342515). The devices used in such new signal reading methods have low resistance to sliding abrasion due to their structures. Thus, the magnetic recording media of the present invention are suitable for the above systems, since the abrasion properties of the media are well considered.

EXAMPLES

The present invention will be illustrated by the following Examples, which will not limit the scope of the present invention in any way. In Examples, "parts" are "parts by weight" unless otherwise indicated.

Example 1

The compositions of undercoat paint components and magnetic paint components used in this examples were as follows:

《Undercoat paint components (1)》

| Iron oxide powder (average particle size: major axis = 0.15 μm, minor axis = 0.023 μm) | 55 parts |
|---|---|
| Carbon black (average particle size: 0.075 μm) | 15 parts |
| Carbon black (average particle size: 0.025 μm) | 15 parts |
| Myristic acid | 1 part |
| Vinyl chloride base copolymer resin ($SO_3Na$ group content: $0.7 \times 10^{-4}$ eq./g) | 10 parts |
| Polyester polyurethane resin ($SO_3Na$ group content: $1 \times 10^{-4}$ eq./g) | 2.5 parts |
| Cyclohexanone | 30 parts |
| Toluene | 16.5 parts |

《Undercoat paint component (2)》

| Butyl stearate | 1.5 parts |
|---|---|
| Cyclohexanone | 45 parts |
| Methyl ethyl ketone | 75 parts |
| Toluene | 21 parts |

《Undercoat paint component (3)》

| Polyisocyanate | 2.5 parts |
|---|---|
| Cyclohexanone | 48 parts |
| Methyl ethyl ketone | 24 parts |
| Toluene | 48 parts |

《Magnetic paint component (1)》

| Iron alloy ferromagnetic powder (Co content = 20 wt. % of iron, Y content = 3 wt. % of (iron + cobalt), Al content = 5 wt. % of (iron + cobalt), Ca content = 0 wt. %, σs = 140 emu/g, Hc = 1,840 Oe, pH = 8, average major axis size = 0.1 μm) | 81 parts |
|---|---|
| Vinyl chloride-hydroxyl group-containing propyl acrylate copolymer resin ($SO_3Na$ group content: $0.7 \times 10^{-4}$ eq./g) | 10 parts |

(continued)

| | |
|---|---|
| Polyester polyurethane resin ($SO_3Na$ group content: $1 \times 10^{-4}$ eq./g) | 6 parts |
| Alpha-alumina | 8.1 parts |
| Carbon black (average particle size = 30 nm, DBP oil absorption = 178cc/100 g) | 1.6 parts |
| Phthalic anhydride | 0.4 part |
| Myristic acid | 0.8 part |
| Methyl ethyl ketone | 163 parts |
| Toluene | 80 parts |

〈Magnetic paint component (2)〉

| | |
|---|---|
| Polyisocyanate | 3 parts |
| Cyclohexanone | 163 parts |

The undercoat paint component (1) was kneaded with a kneader, and then the undercoat paint component (2) was added, followed by stirring. Then, the mixture was dispersed with a sand mill at a residence time of 60 minutes. To the dispersed mixture, the undercoat paint component (3) was added, and the mixture was stirred and then filtrated to obtain an undercoat paint.

Separately, the magnetic paint component (1) was kneaded with a kneader and dispersed with a sand mill at a residence time of 45 minutes. Then, the magnetic paint component (2) was added to the dispersed magnetic paint component (1), stirred and then filtrated to obtain a magnetic paint.

The above-prepared undercoat paint was coated on a nonmagnetic substrate made of a polyethylene terephthalate film, which had a shrinkage factor of 0.8 % in a machine direction and a shrinkage factor of 0.6 % in a transverse direction after being heated at 105°C for 30 minutes, and a ratio of a modulus in a machine direction to that in a transverse direction of 1.0, followed by drying and calendering to obtain an undercoat layer having a thickness of 2 $\mu$m.

Then, the above magnetic paint was coated at a coating rate of 100 m/min. on the formed undercoat layer, followed by orientation in a magnetic field, drying and calendering to obtain magnetic layer having a thickness of 0.2 $\mu$m. The orientation treatment in a magnetic field was carried out using an apparatus comprising a pair of magnets (5 kG) with facing their N poles each other in front of a drier, and two pairs of magnets (5 kG) with facing their N poles each other at a position of 1.5 m before the finger-touch dried point of a coated layer with a distance of 50 cm.

The composition of a backcoat paint component was as follows:

〈Backcoat paint component〉

| | |
|---|---|
| Carbon black (average particle size = 25 nm) | 86 parts |
| Carbon black (average particle size = 370 nm) | 4 parts |
| Barium sulfate | 10 parts |
| Nitrocellulose | 30 parts |
| Polyurethane resin (containing $SO_3Na$ groups) | 55 parts |
| Cyclohexanone | 260 parts |
| Toluene | 260 parts |

(continued)

| Methyl ethyl ketone | 525 parts |
|---|---|

The above backcoat paint component was dispersed with a sand mill at a residence time of 45 minutes. Then, 15 parts of polyisocyalate was added to the dispersed paint, followed by stirring and filtrate to obtain a backcoat paint. The backcoat paint was coated on the surface of the nonmagnetic substrate opposite to the magnetic layer, followed by drying and calendering to form a backcoat layer having a thickness of 0.5 $\mu$m.

After the formation of the undercoat layer, magnetic layer and backcoat layer, the obtained magnetic sheet was calendered with a seven-step calenering machine at a temperature of 70°C under a linear pressure of 150 kg/cm. Then, the magnetic sheet was wound around a sheet core and aged at 60°C, 40%RH for 48 hours. Finally, the magnetic sheet was slit at a width of 1/2 inch to obtain a magnetic tape.

The surface of the magnetic layer of this magnetic tape was abraded with a diamond wheel having a diameter of 150 mm at a peripheral speed of +170 % in relation to the running speed of the tape at a winding angle of 20 degrees while running the tape at a speed of 200 m/min. to obtain a finished magnetic tape.

Then, the magnetic tape was installed in a cassette case to obtain a magnetic tape for computers.

Example 2

A magnetic tape for computers was produced in the same manner as in Example 1 except that the residence time in the sand mill in the preparation of an undercoat paint was changed to 90 minutes, a magnetic powder in the magnetic paint component (1) was changed to an iron-alloy ferromagnetic powder (Co content = 30 wt. % of iron, La content = 3 wt. % of (iron + cobalt), Al content = 5 wt. % of (iron + cobalt), Ca content = 0.001 wt. % of iron, $\sigma$s = 160 emu/g, Hc = 2,300 Oe, pH = 8, average major axis size = 0.1 $\mu$m), the amount of $\alpha$-alumina was changed to 12.15 parts, the intensity of magnets in the drier was changed to 3 kG, and the winding angle in the abrading process was changed to 15 degrees.

Example 3

A magnetic tape for computers was produced in the same manner as in Example 1 except that the amount of cyclohexanone in the undercoat paint component (1) was changed to 24 parts, the amount of cyclohexanone in the undercoat paint component (2) was changed to 51 parts, the residence time in the sand mill in the preparation of an undercoat paint was changed to 45 minutes, a magnetic powder in the magnetic paint component (1) was changed to an iron alloy ferromagnetic powder (Co content = 10 wt. % of iron, Y content = 3 wt. % of (iron + cobalt), Al content = 5 wt. % of (iron + cobalt), Ca content = 0.001 wt. % of iron, $\sigma$s = 150 emu/g, Hc = 1,740 Oe, pH = 8, average major axis size = 0.1 $\mu$m), the amount of $\alpha$-alumina was changed to 12.15 parts, the calendering temperature was changed to 80°C, the linear pressure in the calendering was changed to 125 kg/cm, the winding angle in the abrading process was changed to 20 degrees, and the peripheral speed of the diamond wheel was changed to +200 %.

Example 4

A magnetic tape for computers was produced in the same manner as in Example 1 except that a magnetic powder in the magnetic paint component (1) was changed to an iron alloy ferromagnetic powder (Co content = 10 wt. % of iron, Y content = 3 wt. % of (iron + cobalt), Al content = 5 wt. % of (iron + cobalt), Ca content = 0.001 wt. % of iron, $\sigma$s = 175 emu/g, Hc = 1,880 Oe, pH = 8, average major axis size 0.1 $\mu$m), the intensity of magnets in the drier was changed to 3 kG, the calendering temperature was changed to 65°C, the linear pressure in the calendering was changed to 150 kg/cm, the winding angle in the abrading process was changed to 20 degrees, and the peripheral speed of the diamond wheel was changed to +200 %.

Example 5

A magnetic tape for computers was produced in the same manner as in Example 1 except that the residence time in the sand mill in the preparation of an undercoat paint was changed to 45 minutes, a magnetic powder in the magnetic paint component (1) was changed to an iron alloy ferromagnetic powder (Co content = 30 wt. % of iron, Y content = 3 wt. % of (iron + cobalt), Al content = 5 wt. % of (iron + cobalt), Ca content = 0.001 wt. % of iron, $\sigma$s = 170 emu/g, Hc = 2,300 Oe, pH = 8, average major axis size = 0.1 $\mu$m), the amount of $\alpha$-alumina was changed to 9.72 parts, the thickness of a magnetic layer was changed to 0.15 $\mu$m, the intensity of magnets in the drier was changed to 3 kG, the calendering temperature was changed to 75°C, the linear pressure in the calendering was changed to 100 kg/cm, the winding angle in the abrading process was changed to 5 degrees, and the peripheral speed of the diamond wheel was changed to +200 %.

Example 6

A magnetic tape for computers was produced in the same manner as in Example 1 except that the residence time in the sand mill in the preparation of an undercoat paint was changed to 45 minutes, a magnetic powder in the magnetic paint component (1) was changed to an iron alloy ferromagnetic powder (Co content = 30 wt. % of iron, Y content = 3 wt. % of (iron + cobalt), Al content = 5 wt. % of (iron + cobalt), Ca content = 0.001 wt. % of iron, $\sigma s$ = 170 emu/g, Hc = 2,300 Oe, pH = 8, average major axis size = 0.1 $\mu$m), the amount of $\alpha$-alumina was changed to 12.15 parts, a polyethylene naphthalate film, which had a shrinkage factor of 0.5 % in a machine direction and a shrinkage factor of 0.5 % in a transverse direction after being heated at 105°C for 30 minutes, and a ratio of a modulus in a machine direction to that in a transverse direction of 0.7, was used as a nonmagnetic substrate, the calendering temperature was changed to 80°C, the linear pressure in the calendering was changed to 200 kg/cm, the winding angle in the abrading process was changed to 30 degrees, and the peripheral speed of the diamond wheel was changed to +200 %.

Comparative Example 1

A magnetic tape for computers was produced in the same manner as in Example 1 except that no undercoat layer was formed, a magnetic powder in the magnetic paint component (1) was changed to a Fe-Ni-Zn alloy ferromagnetic powder containing neither cobalt nor rare earth elements (Al content = 0.03 wt. % of (iron + cobalt), Ca content = 0.05 wt. % of iron, $\sigma s$ = 155 emu/g, Hc = 1,800 Oe, pH = 11, average major axis size = 0.2 $\mu$m), the residence time in the sand mill in the preparation of an undercoat paint was changed to 60 minutes, and the thickness of a magnetic layer was changed to 2.2 $\mu$m.

Comparative Example 2

A magnetic tape for computers was produced in the same manner as in Example 1 except that the amount of cyclohexanone in the undercoat paint component (1) was changed to 41.5 parts, the amount of cyclohexanone in the undercoat paint component (2) was changed to 33.5 parts, a magnetic powder in the magnetic paint component (1) was changed to an iron alloy ferromagnetic powder (Co content = 30 wt. % of iron, Y content = 3 wt. % of (iron + cobalt), Al content = 5 wt. % of (iron + cobalt), Ca content = 0.001 wt. % of iron, $\sigma s$ = 170 emu/g, Hc = 2,330 Oe, pH = 8, average major axis size = 0.15 $\mu$m), the amount of $\alpha$-alumina was changed to 6.48 parts, a polyethylene naphthalate film, which had a shrinkage factor of 2.3 % in a machine direction and a shrinkage factor of 1.5 % in a transverse direction after being heated at 105°C for 30 minutes, and a ratio of a modulus in a machine direction to that in a transverse direction of 1.2, was used as a nonmagnetic substrate, no magnet was provided in front of the drier in the orientation treatment, and the pairs of magnets in the drier were changed to one pair of magnets (2 kG) with N poles facing each other and one pair of magnets (2 kG) with the N pole of one magnet facing the S pole of the other.

Comparative Example 3

A magnetic tape for computers was produced in the same manner as in Example 1 except that the amount of cyclohexanone in the undercoat paint component (1) was changed to 24 parts, the amount of cyclohexanone in the undercoat paint component (2) was changed to 51 parts, the amount of $\alpha$-alumina was changed to 16.2 parts, the resident time in the sand mill in the preparation of an undercoat paint was changed to 30 minutes, the thickness of a magnetic layer was changed to 0.5 $\mu$m, the calendering temperature was changed to 60°C, the linear pressure in the calendering was changed to 100 kg/cm, the winding angle in the abrading process was changed, to 5 degrees, and the peripheral speed of the diamond wheel was changed to +150 %.

Comparative Example 4

A magnetic tape for computers was produced in the same manner as in Example 1 except, that the amount of cyclohexanone in the undercoat paint component (1) was changed to 41.5 parts, the amount of cyclohexanone in the undercoat paint component (2) was changed to 33.5 parts, the residence time in the sand mill in the preparation of an undercoat paint was changed to 90 minutes, a magnetic powder in the magnetic paint component (1) was changed to an iron alloy ferromagnetic powder (Co content = 30 wt. % of iron, Y content = 3 wt. % of (iron + cobalt), Al content = 5 wt. % of (iron + cobalt), Ca content = 0.001 wt. % of iron, $\sigma s$ = 160 emu/g, Hc = 2,300 Oe, pH = 8, average major axis size = 0.1 $\mu$m), the amount of $\alpha$-alumina was changed to 2.43 parts, the residence time in the sand mill in the preparation of a magnetic paint was changed to 60 minutes, a polyethylene naphthalate film, which had a shrinkage factor of 0.5 % in a machine direction and a shrinkage factor of 0.5 % in a transverse direction after being heated at 105°C for 30 minutes, and a ratio of a modulus in a machine direction to that in a transverse direction of 0.7, was used as a non-magnetic substrate, the thickness of a magnetic layer was changed to 0.05 $\mu$m, the intensity of magnets in front of the driere and also those an the drier was changed to 3 kG, the calendering temperature was changed to 90°C, and the linear pressure in the calendering was changed to 250 kg/cm.

With the magnetic tapes for computers produced in Examples and Comparative Examples, the surface roughness, squareness (in a machine direction and an in-plane direction) and surface resistivity of the magnetic layer were measured as follows:

〈Surface roughness〉

An objective head (40 times magnification) was attached to a non-contact surface roughness meter ("TOPO-3D" produced by WYCO), and (P-V) and Ra were measured four times with the surface roughness meter at a measuring wavelength of 648.9 nm on a measuring area of 250 $\mu$m square with gradient, curvature and cylindrical compensations, and four measured values were averaged to obtain an Ra/(P-V) ratio. Then, ten ratios measured in different areas were again averaged.

〈Squareness〉

A sample was set on a sample-vibrating magnetometer ("VSM-5" manufactured by TOEI Industries, Ltd.), and a squareness in a machine direction and that in a direction perpendicular to the surface of a magnetic layer (in-plane direction) were measured. The sample was prepared by laminating 32 pieces of the tape in the same direction and the laminate was cut to a size of 5 mm x 6 mm. The maximum magnetic flux was 10 kOe.

〈Surface resistivity〉

A high resistance meter ("4329 A" manufactured by Hewlett-Packard) was used. A sample tape was wound around a pair of brass blocks each having a radius of curvature of 10 mm, which were placed with a distance of 12.25 mm. Weights (each 50 g) were attached to the respective ends of the tape. Then, detectors were allowed in contact with the respective brass blocks, and a surface resistivity was measured.

The results are shown in Table 1.

Table 1

| | Surface roughness | | Squareness | | Surface resistivity ($\Omega$/square) |
|---|---|---|---|---|---|
| | Ra (nm) | (P-V)/Ra | Machine direction | In-plane | |
| Ex. 1 | 4.7 | 9.4 | 0.82 | 0.20 | $1.0 \times 10^6$ |
| Ex. 2 | 3.1 | 5.7 | 0.80 | 0.25 | $1.0 \times 10^6$ |
| Ex. 3 | 6.4 | 18.8 | 0.85 | 0.17 | $1.0 \times 10^5$ |
| Ex. 4 | 4.5 | 7.9 | 0.78 | 0.40 | $1.0 \times 10^6$ |
| Ex. 5 | 4.4 | 8.5 | 0.78 | 0.45 | $1.0 \times 10^6$ |
| Ex. 6 | 4.5 | 9.1 | 0.80 | 0.30 | $1.0 \times 10^6$ |
| C. Ex. 1 | 5.1 | 11.5 | 0.85 | 0.15 | $1.0 \times 10^9$ |
| C. Ex. 2 | 3.5 | 12.5 | 0.60 | 0.52 | $1.0 \times 10^8$ |
| C. Ex. 3 | 12.7 | 20.4 | 0.78 | 0.35 | $1.2 \times 10^7$ |
| C. Ex. 4 | 2.8 | 2.5 | 0.68 | 0.30 | $1.5 \times 10^6$ |

With the magnetic tapes for computers produced in Examples and Comparative Examples, the ratio of a modulus in a machine direction to that in a transverse direction, and a block error rate were measured as follows:

〈Moduli in machine and transverse directions〉

A strain-tensile strength of a tape was measured at 23°C, 50%RH with a small tensile tester (manufactured by Yokohama System Co., Ltd.). The length of a sample was 10 mm, and a pulling rate was 10%-strain/min.

A 0.3 % modulus was evaluated based on the tensile strength at 0.3 % strain.

The modulus was measured both in the machine and transverse directions of the tape, and then the ratio of modulus in the machine direction to that in the transverse direction was calculated.

〈Block error rate〉

An error rate was measured with DLT 7000 Drive (manufactured by Quantum) at 20°C, 25%RH. A sample tape was traveled four times, and then the error rate measured in the fifth traveling was used for evaluation. The results are shown in Table 2.

Table 2

| | Ratio of modulus: Machine direction to transverse direction | Block error rate (errors/MB) |
|---|---|---|
| Ex. 1 | 1.20 | $2.0 \times 10^{-7}$ |
| Ex. 2 | 1.15 | $2.5 \times 10^{-7}$ |
| Ex. 3 | 1.23 | $1.5 \times 10^{-7}$ |
| Ex. 4 | 1.10 | $2.0 \times 10^{-7}$ |
| Ex. 5 | 1.10 | $3.0 \times 10^{-7}$ |
| Ex. 6 | 0.90 | $5.0 \times 10^{-7}$ |
| C. Ex. 1 | 1.50 | $1.0 \times 10^{-3}$ |
| C. Ex. 2 | 1.25 | $1.0 \times 10^{-2}$ |
| C. Ex. 3 | 1.10 | $5.0 \times 10^{-4}$ |
| C. Ex. 4 | 0.80 | $1.5 \times 10^{-5}$ |

As can be seen from Tables 1 and 2, the magnetic tapes for computers of Examples 1-6 according to the present invention had very small block error rates and thus had a fewer temporary errors than those of Comparative Examples 1-4. Thus, the magnetic tapes of the present invention have high reliability.

## Claims

1.  A magnetic recording medium comprising a non-magnetic substrate, an undercoat layer and a magnetic layer containing a magnetic powder and a binder, which are laminated in this order, wherein said magnetic layer has a ratio of (P-V) to Ra in the range between 4 and 20, in which (P-V) is a maximum roughness and Ra is a center line average height, a squareness of at least 0.7 in the machine direction of said magnetic layer, a squareness of 0.5 or less in a direction perpendicular to the surface of said magnetic layer, and a surface resistivity of $10^{7}$ Ω/sq. or less.

2.  A magnetic recording medium according to claim 1, wherein a ratio of a modulus in the machine direction to that in the transverse direction is from 0.85 and 2.00.

3.  A magnetic recording medium according to claim 1, wherein the total thickness of the magnetic recording medium does not exceed 9 μm.